Europäisches Patentamt

European Patent Office

Office européen des brevets

(19)

(11) Numéro de publication: **0 094 705**
**A1**

(12) ## DEMANDE DE BREVET EUROPEEN

(21) Numéro de dépôt: 83200628.2

(22) Date de dépôt: 03.05.83

(51) Int. Cl.³: **F 27 D 5/00**
F 27 D 3/00, B 65 G 49/00
B 65 G 47/90

(30) Priorité: 12.05.82 IT 8556382

(43) Date de publication de la demande:
23.11.83 Bulletin 83/47

(84) Etats contractants désignés:
AT BE CH DE FR GB IT LI LU NL SE

(71) Demandeur: O.T.C. PUTIN VILLAVERLA S.p.A.
Piazza del Popolo, 4
I-36030 Villaverla Vicenza(IT)

(72) Inventeur: Putin, Enrico
Piazza del Popolo, 13
I-36030 Villaverla (Vicenza)(IT)

(74) Mandataire: Bettello, Luigi
Studio Tecnico Dott. Ing. LUIGI BETTELLO Via Col
d'Echele, 25
I-36100 Vicenza(IT)

(54) Procédé pour le chargement et le déchargement des piles de tuiles ou autres produits en terre cuite sur les chariots d'alimentation des fours de cuisson.

(57) Conformément à l'invention l'on a recours à des palettes (1, 5) à profil en forme de H pour recevoir les groupes de produits en terre (4, 3) destinés à être transférés au four de cuisson, ainsi qu'à un appareillage de manutention comprenant deux pinces latérales et une pince centrale aptes à opérer le chargement et le déchargement des groupes précités sur ces palettes, et de ces dernières sur le chariot (7).

FIG. 1

EP 0 094 705 A1

Procédé pour le chargement et le déchargement des piles de tuiles ou autres produits en terre cuite sur les chariots d'alimentation des fours de cuisson -

La présente invention a pour objet un procédé pour le chargement et le déchargement des piles de tuiles (rondes ou planes) et autres produits en terre cuite, sur les chariots destinés à être introduits dans les fours, tunnels ou autres unités de cuisson, lequel procédé fait appel à des palettes à profil en forme de H réalisées en matériau réfractaire et à des plaques posées sur lesdites palettes en vue de supporter d'autres palettes superposées.

On sait que depuis toujours les tuiles sont introduites dans les fours de cuisson à l'aide de chariots sur lesquels elles sont empilées par groupes rangés dans des palettes ou casiers en matériau réfractaire. Ces palettes sont généralement superposées suivant trois rangées, les bords étant tournés vers le haut en vue d'éviter d'imposer une charge excessive aux produits eux-mêmes qui a leur sortie du séchage, mais avant cuisson, ne comportent pas une résistance suffisante pour supporter un poids important, cette disposition améliorant simultanément la pénétration de l'air chaud entre les produits considérés.

Plus récemment on a proposé un nouveau procédé pour effectuer le chargement et le déchargement des piles du tuiles sur les chariots des fours-tunnels, moyennant emploi de palettes retournées en matériau réfractaire. Ce procédé fait l'objet de la demande de brevet italien N° 85850/A/79 au nom de la présente Demanderesse.

Le procédé suivant la présente invention, utilisant des palettes en matériau réfractaire établies à un profil en forme de H, constitue un perfectionnement aux procédés connus principalement par le fait qu'il réduit le nombre de palettes à manipuler pour un même volume de produits à cuire et qu'il simplifie en outre les opérations de chargement et de déchargement des chariots.

Le profil particulier des palettes permet effectivement de charger quatre couches de produits à cuire, en les soutenant latéralement à l'aide de deux rangées seulement de palettes et d'une série de plaques intermédiaires de séparation, alors que pour charger la même quantité de produits il faudrait avoir recours à quatre rangées de palettes classiques à profil en U.

Le dessin annexé, donné à titre d'exemple, permettra de mieux comprendre l'invention, les caractéristiques qu'elle présente et les avantages qu'elle est susceptible de procurer :

   Fig. 1 est une vue de côté schématique montrant un ensemble de palettes à profil en H, monté sur un chariot destiné à être introduit dans un four de cuisson.

   Fig. 2 est la vue en élévation correspondante.

   Fig. 3 à 6 montrent le chariot à quatre phases successives des opérations de chargement.

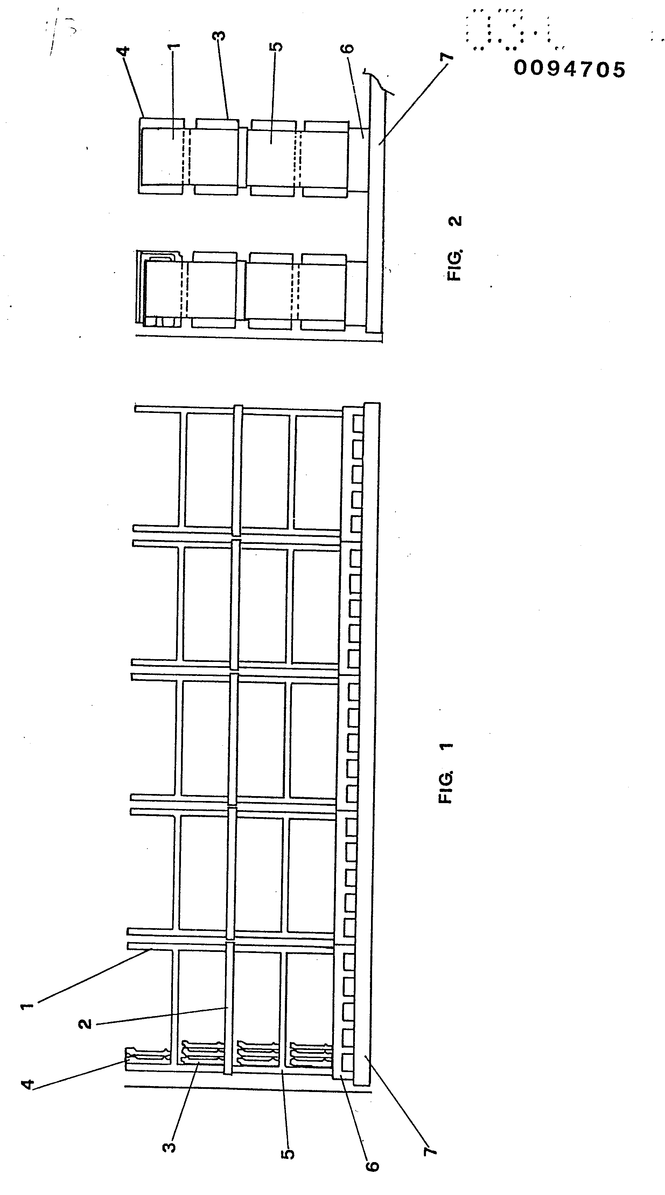

Comme montré en fig. 1 et 2, les palettes 1 utilisées pour les opérations de chargement d'un four destiné à la cuisson des tuiles rondes, tuiles plates et autres articles similaires en terre, présentent en section la forme d'un H, et sont disposées en superposition suivant plusieurs couches, avec interposition de plaques 2 à profil plan, elles-aussi réalisés en matériaux réfractaire ou autre matière appropriée.

Chaque palette est propre à supporter deux rangées superposées 3 et 4 de tuiles à l'intérieur de ses espaces vides. La première couche de palettes 5 prend appui sur des embases 6 réalisées à la façon en soi connue en matériau réfractaire et présentant un profil en forme de peigne pour laisser passage aux fumées, lesquelles embases 6 sont elles-mêmes supportées par le plateau d'un chariot 7 proprement dit.

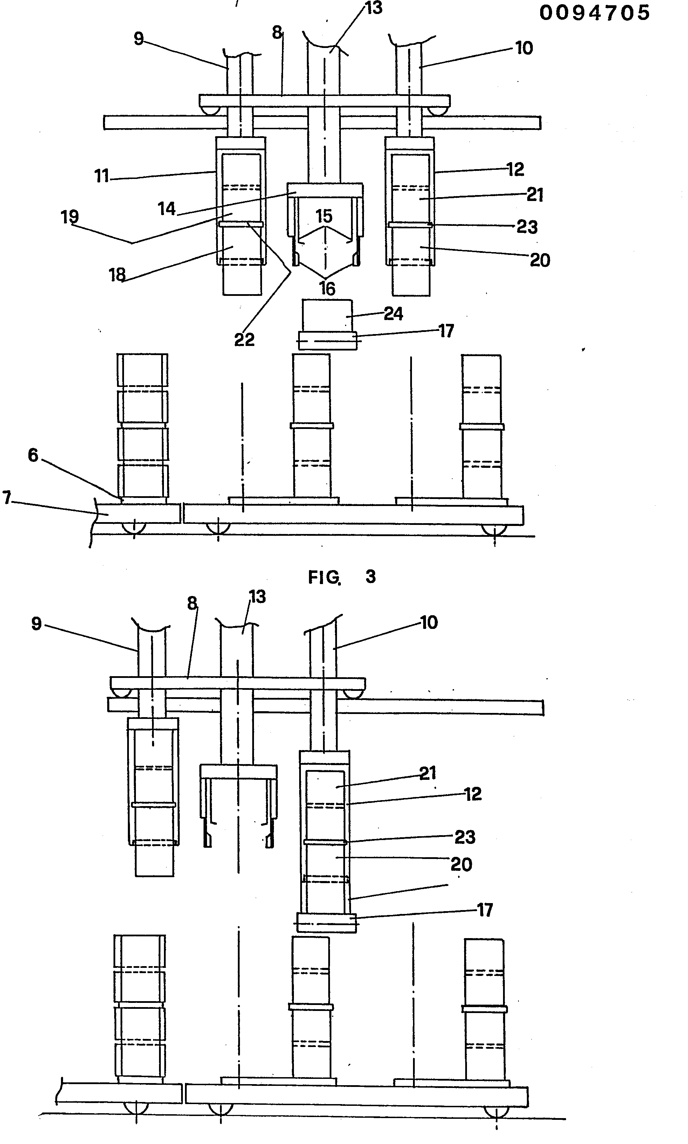

Les opérations destinées au chargement et au déchargement du chariot en produits à cuire vont maintenant être décrites en se référant aux fig. 3 à 6.

Fig. 3 montre l'appareillage utilisé pour le chargement des produits à cuire sur le chariot qui supporte les palettes vides en matériau réfractaire, provenant d'une opération de déchargement antérieure. Cet appareillage comprend un chariot porte-fourches 8 auquel sont suspendues deux colonnes latérales 9 et 10 qui supportent des fourches ou pinces de préhension 11 et 12, et une colonne centrale 13 pourvue d'une fourche double 14 ; cette dernière est équipée d'une part de pinces centrales 15 propres à saisir les palettes et d'autre part de pinces latérales 16 pour la prise des produits en terre cuite.

On observera que ces produits sont amenés à l'état déjà groupé en avançant sur un tapis transporteur 17 disposé à une hauteur légèrement supérieure au niveau maximal atteint par les palettes sur le chariot 7 à charger.

Fig. 3 illustre une première phase opératoire au cours de laquelle deux séries de palettes, respectivement 18-19, prélevées de la première pile de palettes et 20 et 21 prélevées de la troisième pile, disposées à l'état vide sur le chariot 7, ont été soulevées par les fourches ou pinces 11 et 12, en même temps que les plaques intermédiaires 22 et 23 en matériau réfractaire.

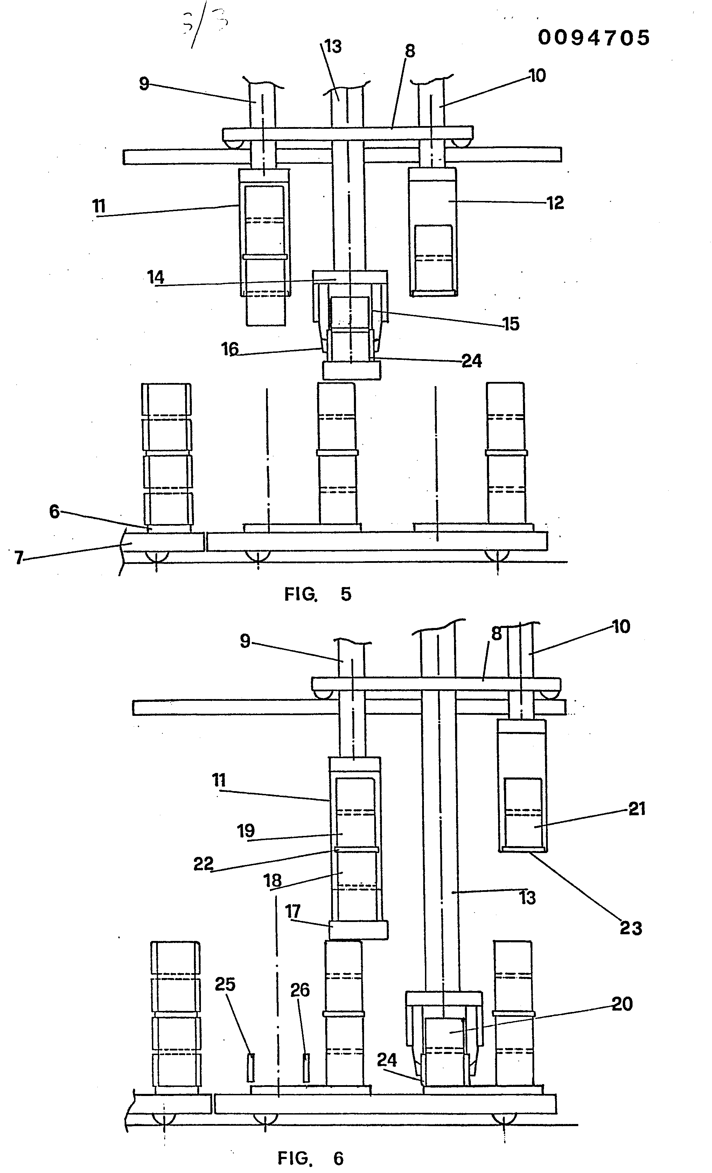

Dans la phase opératoire subséquente illustrée en fig. 4, on observera que la colonne de droite 10 a été abaissée sur le tapis de regroupement 17 afin de disposer la palette 20 au-dessus de la pile de produits 24 placée sur ledit tapis 17.

A ce moment les pinces 12 se soulèvent en déplaçant avec elles la palette 21 et la plaque 23, mais en laissant la palette 20 sur le tapis 17 d'où elle sera prélevée par les pinces 15 (fig. 5), tandis que les produits 24 sont saisis par les pinces 16, ces pinces 15 et 16 étant élevées ensemble par la colonne centrale 13.

Puis la colonne 13 vient déposer la palette 20 et les produits 24 sur le côté de la dernière colonne de droite à la place même où se trouvait à l'origine la palette 20 à l'état vide.

Les opérations se répètent donc pour la colonne 9 qui a l'aide de ses pinces 11 fait en sorte que la palette 18 vienne se disposer au-dessus d'un nouveau groupe de produits amené par le tapis transporteur 17, afin de déposer cette palette 18 sur ledit tapis d'où elle sera prélevée par la pince centrale portée par la colonne 13 en vue de son déchargement sur la première colonne de gauche du chariot 7.

Le processus se poursuit dans les mêmes conditions pour les palettes 21 et 19 de la couche supérieure, lesquelles sont déposées, cette fois en même temps que les plaques 22 et 23, sur les groupes de produits amenés par le tapis transporteur 17, et sont ensuite saisies par la pince double centrale portée par la colonne 13, afin d'être placées au-dessus des palettes de la première couche précédemment positionnées sur le chariot 7.

En renouvelant l'opération entière avec les deux autres séries de palettes de la seconde et de la quatrième rangée, on peut procéder au chargement des quatre rangées de palettes disposées sur le chariot, pour reprendre en conséquence tout le processus opératoire avec une série suivante de palettes préalablement placée sur ledit chariot.

Moyennant une succession inverse d'opérations on peut décharger les produits d'un chariot à sa sortie du four de cuisson, en les disposant sur un tapis transporteur analogue à celui référencé 17 en vue d'assurer leur évacuation appropriée.

Dans le cas où le dispositif élévateur serait limité à la seule fourche ou pince latérale 11 et à la seule fourche ou pince centrale 13, il serait alors nécessaire de prévoir le dispositif pour la retenue des produits schématiquement représenté en fig. 6 et comprenant deux tiges latérales 25 et 26 qui s'engagent sur le chariot 7 par les côtés en vue de maintenir les produits en position verticale avant de les surmonter d'une palette vide propre à les retenir.

On comprend sans peine les avantages susceptibles d'être obtenus par la mise en oeuvre du procédé de chargement et de déchargement suivant l'invention et par l'utilisation des palettes à profil en H sus-décrites. On notera en particulier l'économie considérable de matériau réfractaire utilisé pour l'enfournement du fait que chaque rangée de palettes en H équivaut en volume à deux rangées de palettes en U, ainsi que la simplification notable des manoeuvres pour le chargement et le déchargement du chariot destiné à être introduit dans le four de cuisson, simplification qui se traduit évidemment de manière favorable sur le coût de la main d'oeuvre.

Revendications

1. Procédé pour le chargement et le déchargement des piles de tuiles ou autres produits en terre cuite sur les chariots destinés aux fours de cuisson, caractérisé en ce qu'on a recours à des palettes (1) en matériau réfractaire présentant un profil en forme de H, propres à prendre appui sur le plateau du chariot pour la première couche et sur des plaques également en matériau réfractaire pour les couches supérieures, l'espace inférieur et l'espace supérieur du profil en H de chacune desdites palettes formant logements pour des groupes de produits à cuire en permettant ainsi la réduction du nombre des éléments accessoires de cuisson en matériau réfractaire et la simplification des opérations de chargement et de déchargement des chariots destinés à être introduits dans les fours.

2. Procédé suivant la revendication 1, caractérisé en ce qu'il prévoit l'emploi d'un dispositif élévateur comprenant trois colonnes (9, 10, 13) mobiles verticalement dont les deux latérales (9, 10) portent des pinces (11, 12) propres à saisir les palettes vides et leurs plaques intermédiaires en matériau réfractaire, tandis que la colonne centrale (13) est pourvue d'une pince centrale (15) destinée à coopérer avec les palettes et d'une pince extérieure (16) susceptible de saisir les produits amenés à l'état regroupé par un tapis transporteur (17), afin de déposer l'ensemble sur le plateau du chariot ou sur des plaques planes (22) posées sur les palettes inférieures et d'assurer de la sorte le garnissage de la partie supérieure des palettes à l'aide d'une opération subséquente et d'un autre groupe de produits.

3. Procédé suivant la revendication 2, caractérisé en ce que les deux pinces latérales (11, 12) du dispositif élévateur assurent le déplacement des palettes tandis que le déplacement des groupes de produits et celui des palettes à superposer aux produits eux-mêmes sont opérés par la pince centrale double (15, 16).

4. Procédé suivant l'une quelconque des revendications 1 à 3, caractérisé en ce que, lorsqu'on a recours à un dispositif élévateur pourvu d'une seule pince pour la préhension des palettes et d'une seule pince pour la manutention des produits, il est prévu deux tiges latérales de service (25, 26) portées par les côtés du chariot (7) afin de maintenir en position verticale les groupes de produits qui doivent être placés soit sur le plateau du chariot (7), soit sur les plaques intermédiaires (22).

FIG. 1

FIG. 2

2/3

0094705

FIG. 3

FIG. 5

FIG. 6

0094705

# 0094705

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 500 139  (CMPR) | | F 27 D    5/00<br>F 27 D    3/00<br>B 65 G   49/00<br>B 65 G   47/90 |
| | --- | | |
| A | FR-A-2 463 375  (OTC PUTIN VILLAVERLA) | | |
| | --- | | |
| A | GB-A-  796 898  (WOOLLISCROFT) | | |
| | --- | | |
| A | US-A-2 696 918  (ARELT) | | |
| | --- | | |
| A | GB-A-2 015 462  (J.A. GUZZETTA) | | |
| | ----- | | |

**DOMAINES TECHNIQUES RECHERCHES (Int. Cl. ³)**

F 27 B
F 27 D
B 65 G

Le présent rapport de recherche a été établi pour toutes les revendications

| Lieu de la recherche | Date d'achèvement de la recherche | Examinateur |
|---|---|---|
| LA HAYE | 18-08-1983 | COULOMB J.C. |